# DEMANDE DE BREVET EUROPEEN

(11) **EP 3 006 261 A1**
(43) Date de publication de la demande: **13.04.2016**
(21) Numéro de dépôt: 15187665.3
(22) Date de dépôt: 30.09.2015
(51) Int. Cl.: B60N 2/28, B60N 2/42

(54) **SIÈGE AUTO POUR ENFANT, À ÉLÉMENT DE PROTECTION LATÉRALE, ET ÉLÉMENT DE PROTECTION CORRESPONDANT**

(30) Priorité: 07.10.2014 FR 1459618
(71) Demandeur: Dorel France, 49309 Cholet Cedex (FR)
(72) Inventeur: GAGNADE, Philippe, 49300 CHOLET (FR)
(74) Mandataire: Vidon Brevets & Stratégie

(57) **Abrégé**

Siège auto pour enfant, comprenant un dossier (111) présentant des extensions latérales (113, 114) et/ou une têtière (115) comprenant des joues latérales (32), s'étendant vers l'avant dudit siège, depuis une portion arrière dudit dossier, et au moins un élément de protection (13) d'une desdites extensions latérales et/ou d'une desdites joues latérales, dont :
- une première extrémité est montée sur ou à proximité de ladite portion arrière du dossier ; et
- une seconde extrémité se projette vers l'avant dudit siège, sensiblement parallèlement à ladite extension latérale (113, 114) et/ou de ladite joue latérale (32),
ladite seconde extrémité présentant une surface de contact (31) destinée à prendre appui contre une portière de véhicule, en cas de choc appliqué sur celle-ci.

## Description

### 1. Domaine de l'invention

Le domaine de l'invention est celui de la puériculture, et plus précisément des sièges pour enfant, destinés à être installés dans des véhicules automobiles. Plus précisément encore, l'invention concerne l'amélioration de la sécurité d'un enfant transporté dans un tel siège, notamment en cas de choc latéral.

### 2. Solutions de l'art antérieur

Les sièges pour enfant présentent généralement une structure définissant un fauteuil pour l'enfant, présentant une assise et un dossier. Ce fauteuil est équipé de moyens de retenu de l'enfant. Selon les cas, le fauteuil peut être solidarisé directement au véhicule, ou est monté sur embase, elle-même solidarisée au véhicule. Cette solidarisation est généralement assurée par des pinces Isofix, ou, selon une approche plus ancienne, à l'aide de la ceinture de sécurité du véhicule.

Pour améliorer le confort de l'enfant, plusieurs aspects peuvent être réglables comme l'inclinaison du fauteuil, l'écartement des bords latéraux de celui-ci, le réglage en hauteur d'une têtière montée en partie supérieure du dossier...

Les concepteurs de sièges automobiles pour enfant cherchent en permanence à augmenter la sécurité, en considérant toutes les situations d'accident envisageables. Ainsi, de nombreuses propositions ont été faites pour améliorer la sécurité en cas de choc latéral, contre la portière du véhicule (ou plus généralement une portion latérale de carrosserie) située à proximité du siège auto installé dans le véhicule.

On sait en effet que les chocs latéraux sont la deuxième cause d'accidents, après les chocs frontaux. Dans ces situations de choc latéral, il existe un risque important pour l'enfant, en particulier au niveau des épaules et de la tête qui peuvent être déplacées violemment, ou qui peuvent être heurtées par un élément de la têtière, celle-ci restant généralement un élément relativement léger et déformable.

Il a ainsi été proposé de placer, dans les zones latérales du siège, telles que les accoudoirs, les joues et la têtière, des éléments absorbants ou gonflables, destinés à dissiper une partie de l'énergie d'un choc latéral.

Selon une autre approche, présentée notamment par les documents de brevet WO2013/189819 ou EP2746097, il a été proposé de prévoir des éléments s'étendant depuis l'arrière du dossier du siège auto pour se diriger vers la portière du véhicule. Cette approche permet de réduire l'espace libre entre la portière et le siège auto, de façon à limiter le déplacement du siège, et donc de l'enfant.

Cette approche est, selon son principe, intéressante. Cependant, sa mise en pratique peut s'avérer peu efficace dans de nombreuses situations. En effet, ces éléments de protection doivent être montés au niveau du dossier, et plus précisément à l'arrière de celui-ci pour prendre appui sur la structure de renfort de ce dossier. De ce fait, l'enfant n'est pas directement protégé, notamment au niveau de la tête et des épaules, par ces éléments de protection.

Cet inconvénient ne se constate pas directement dans le cadre de certains crash-tests classiques, mettant en oeuvre une plaque latérale rigide simulant une portière. En effet, le siège se déplaçant perpendiculairement à cette plaque rigide, et celle-ci ne se déformant pas (comme le ferait la portière d'un véhicule), l'effet souhaité de contact rapide avec l'élément de protection est obtenu efficacement. Cependant, il apparaît que ces tests ne sont pas suffisamment représentatifs de la réalité, et c'est par exemple pour cette raison que les crash-tests d'homologation, en Europe notamment, ont été modifiés (nouveau règlement R. 129 en particulier) pour qu'ils soient « intrusifs » (la portière se déforme et pénètre dans le véhicule), et plus représentatifs de la réalité.

Dans ce dernier cas, on constate que la seule présence d'éléments s'étendant à l'arrière du dossier peut être insuffisante pour protéger la tête de l'enfant. Il est cependant peu aisé de protéger la zone correspondante, du fait que la têtière n'est pas fortement rigide ni renforcée, sauf à prévoir des moyens complexes et coûteux, tels que des airbags.

Il existe donc un besoin important d'amélioration de cette approche, pour augmenter la sécurité des enfants, en particulier au niveau de la tête et des épaules, de façon simple et efficace.

### 3. Présentation de l'invention, selon ses différentes variantes

Ces objectifs, ainsi que d'autres qui apparaitront plus clairement par la suite, sont atteints à l'aide d'un siège auto pour enfant, comprenant un dossier présentant des extensions latérales et/ou une têtière comprenant des joues latérales, s'étendant vers l'avant dudit siège, depuis une portion arrière dudit dossier.

Selon l'invention, le siège comprend au moins un élément de protection d'une desdites extensions latérales et/ou d'une desdites joues latérales, dont :
- une première extrémité est montée sur ou à proximité de ladite portion arrière du dossier ; et
- une seconde extrémité se projette vers l'avant dudit siège, sensiblement parallèlement à ladite extension latérale et/ou de ladite joue latérale,
   ladite seconde extrémité présentant une surface de contact destinée à prendre appui contre une portière de véhicule, en cas de choc appliqué sur celle-ci.

Ainsi, une protection efficace est apportée, en vis-à-vis de la joue de la têtière, et donc de la tête de l'enfant, en cas de choc latéral. La protection est suspendue, face à cette joue de têtière, mais solidarisée fermement à la structure du siège, présente dans le dossier.

La distance entre le siège et la portière est réduite de plusieurs centimètres, et l'impact latéral a lieu sur la surface de contact de l'élément de protection, et non contre la têtière ou l'extension latérale du siège. La protection de la tête de l'enfant est optimisée, même en cas d'intrusion d'une portière déformée à l'intérieur de l'habitacle, puisque la surface d'appui se trouve face à la joue de têtière, et non au niveau du dossier.

Selon un mode de réalisation, un espace libre est ménagé entre ladite seconde extrémité et ladite extension latérale et/ou ladite joue latérale.

Ceci permet, dans certains cas, d'optimiser l'absorption de l'énergie.

Selon une autre caractéristique particulière, ledit élément de protection peut présenter une surface d'appui, destinée à reposer contre ladite extension latérale.

De cette façon, on s'oppose à un basculement de l'élément de protection en cas de choc.

Selon un mode de réalisation particulier, ledit élément de protection comprend une structure de renfort et une coque extérieure.

Notamment, ladite structure de renfort peut comprendre un fil métallique rigide replié en U.

Selon un autre aspect particulier, ledit élément de protection est équipé de moyens de solidarisation réversibles avec ledit dossier.

Il est ainsi possible de le démonter aisément.

Notamment, lesdits moyens de solidarisation peuvent être formés par les extrémités dudit fil métallique.

Par ailleurs, ledit élément de protection peut être symétrique, de façon à pouvoir être monté sélectivement d'un côté ou de l'autre dudit siège.

Dans ce cas, le siège peut ne comprendre qu'un unique élément de protection, que l'utilisateur place à droite ou à gauche, en fonction de l'installation du siège dans le véhicule.

L'invention concerne également un élément de protection tel que décrit ci-dessus en tant que tel.

### 4. Liste des figures

D'autres caractéristiques et avantages de l'invention apparaitront plus clairement à la lecture de toute description d'un mode de réalisation particulier, donné à titre de simples exemples illustratifs et non limitatifs, et des dessins annexés parmi lesquels :
- les figures 1a et 1b illustrent un exemple de siège selon l'invention, vu de côté, respectivement sans et avec l'élément de protection de l'invention ;
- les figures 2a et 2b présentent le siège des figures 1a et 1b, vu de derrière ;
- les figures 3a et 3b présentent le siège des figures 1a et 1b, vu de dessus ;

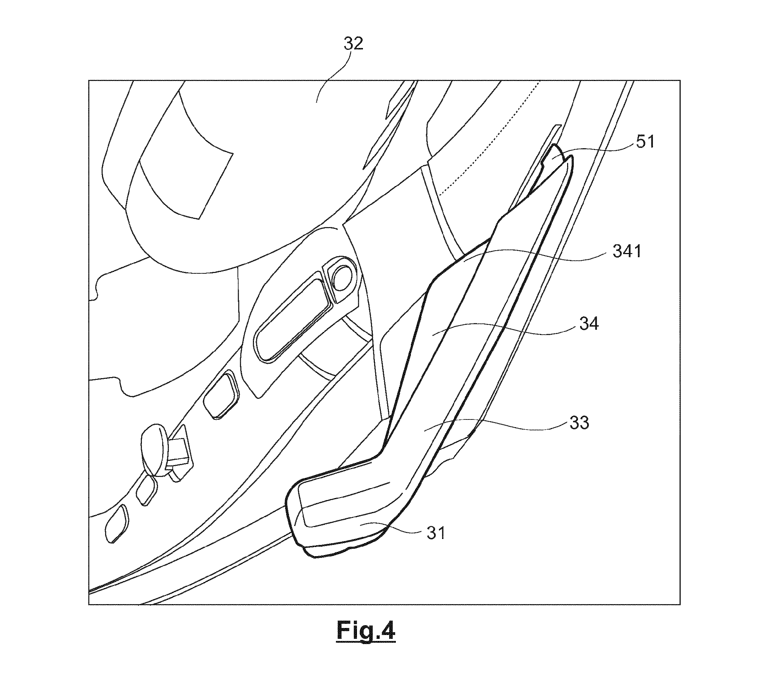

- la figure 4 est une vue agrandie de l'élément de protection, monté sur le siège ;
- la figure 5 présente l'élément de protection, séparé du siège.

### 5. Description d'un mode de réalisation particulier

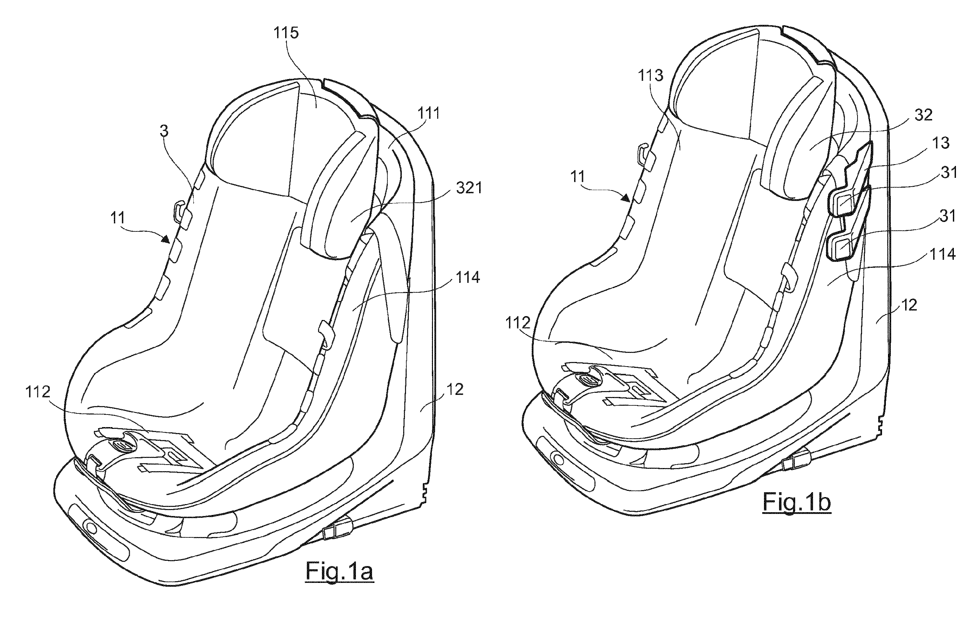

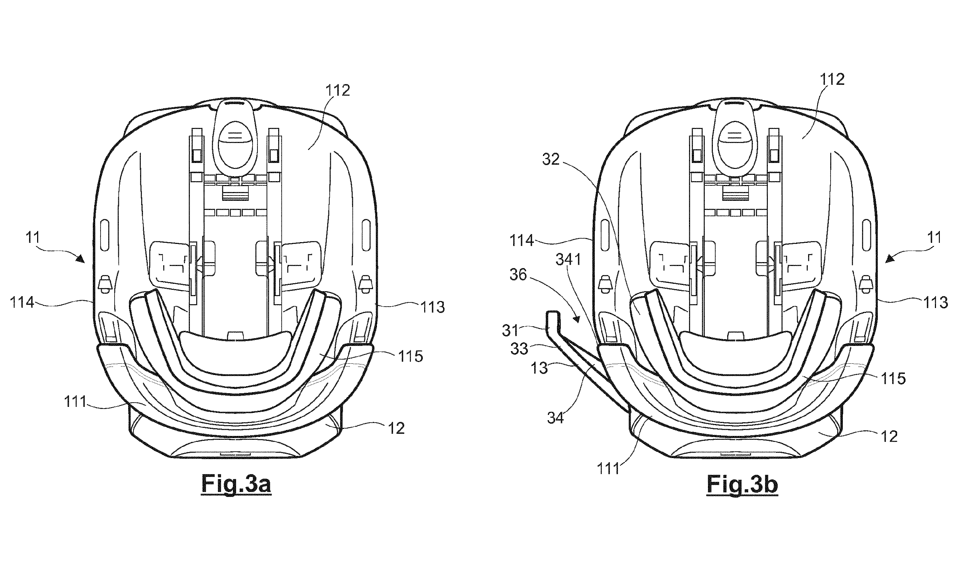

Comme illustré sur les figures 1a à 3b, l'invention s'applique à un siège auto pour enfant 11, monté ici sur une embase 12. Bien sûr, l'invention peut, de la même façon, être mise en oeuvre sur tout type de siège destiné à recevoir un enfant dans un véhicule, avec ou sans embase, réglable ou non.

Le siège 11 comprend un dossier 111 et une assise 112, réalisés dans le même bloc dans ce mode de réalisation. Le dossier 112 se prolonge par deux extensions latérales 113 et 114, se prolongeant par des accoudoirs au niveau de l'assise.

Une têtière 115 est montée dans le dossier 112. Dans le mode de réalisation illustré, elle est réglable en hauteur.

Selon l'invention, le siège auto peut recevoir un élément de protection 13, destiné à réduire l'espace entre le bord du siège et la portière latérale d'un véhicule (voir notamment figure 3b).

Dans le mode de réalisation illustré, cet élément de protection 13 est amovible. Les figures 1a, 2a et 3a présentant le siège sans l'élément de protection et les figures 1b, 2b et 3b le présentant équipé de cet élément de protection 13. Dans d'autres modes de réalisation, l'élément de protection peut être fixe, par rapport au dossier du siège.

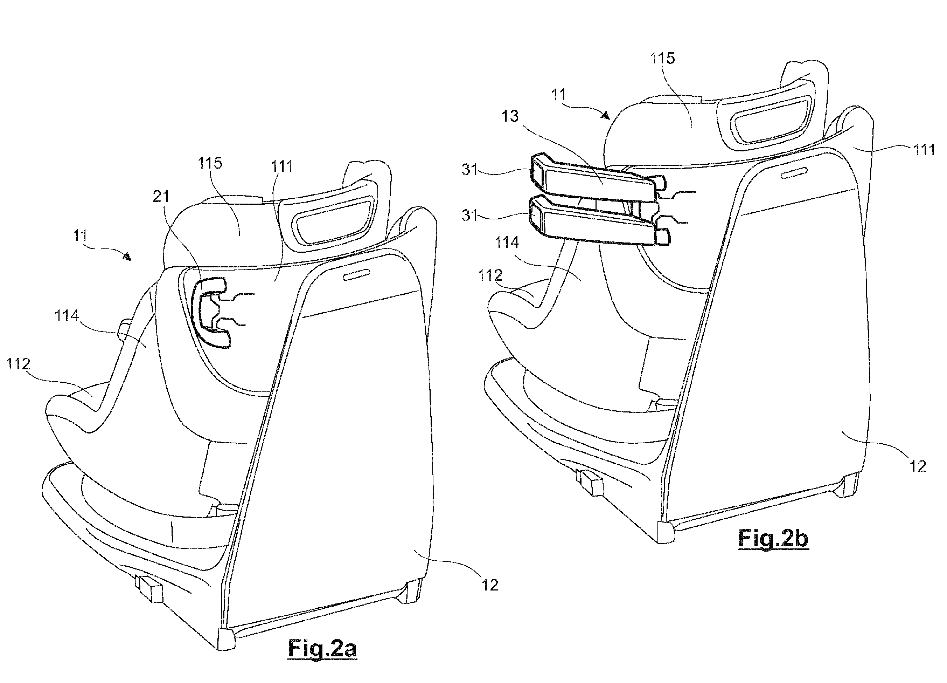

Par ailleurs, dans le mode de réalisation illustré, un seul élément de protection 13 est mis en place, du côté proche de la portière. Il n'est en effet pas nécessaire de prévoir un élément de chaque côté. De ce fait, avantageusement, l'élément de protection 13 peut être réversible, l'utilisateur pouvant l'installer à droite ou à gauche, en fonction de la position d'installation du siège dans le véhicule. Comme on le voit sur la figure 2a, le siège présente, au niveau de l'arrière du dossier, un élément d'accrochage 21, apte à recevoir l'élément de protection 13.

Un élément d'accrochage symétrique existe sur l'autre côté du dossier.

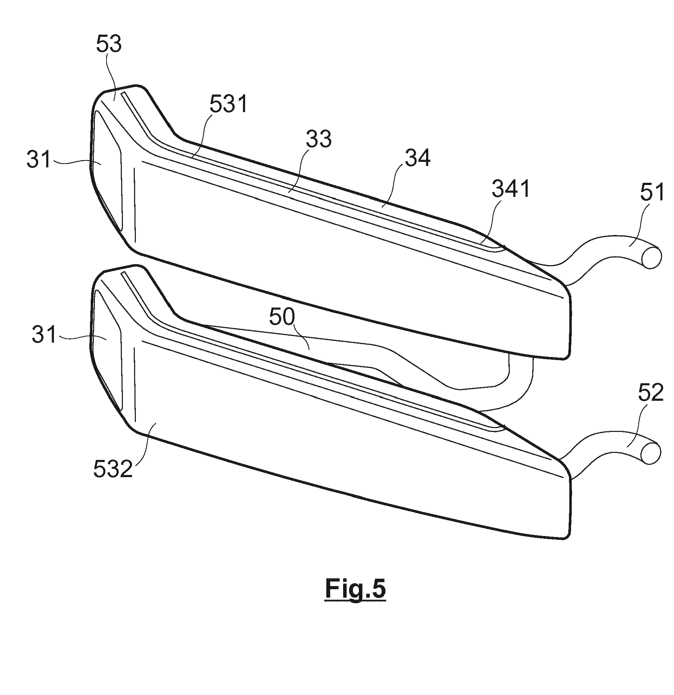

L'élément de protection 13 présente deux portions d'accrochage 51 et 52 (voir figure 5) aptes à coopérer avec des logements complémentaires dans l'élément d'accrochage 21.

Lorsque l'élément de protection 13 est installé (figures 1b, 2b et 3b), il présente une zone de contact 31, qui est la première en contact avec la portière du véhicule, en cas de choc latéral. Elle s'étend sensiblement parallèlement au bord latéral du siège (et donc sensiblement parallèlement à la portière), sensiblement en face de la joue 32 de la têtière 115, de façon à protéger celle-ci, et en conséquence la tête de l'enfant.

Une portion de liaison 33 relie cette surface d'appui, ou zone de contact, 31 au dossier 111. Elle porte une zone de renfort 34, présentant une surface d'appui 341, venant en appui le long de la partie latérale du siège, pour s'opposer au basculement de l'élément de protection 13, en cas de choc latéral.

La forme de l'élément de protection 13 permet de ménager un espace libre 36 (voir figure 3b), entre la zone d'appui 31 et l'extension latérale 114 (et plus encore la joue 32).

L'élément de protection 13 est rigide, autant que faire se peut. Selon le mode de réalisation illustré, (voir figure 5) un fil métallique rigide 50, replié en U, forme une structure de maintien et de renfort. Celle-ci est recouverte d'une coque 53, en matière plastique par exemple, donnant la forme souhaitée à l'élément de protection.

Dans le mode de réalisation illustré, cette coque 53 est formée de deux éléments identiques 531 et 532.

L'approche de l'invention permet ainsi de protéger de façon efficace la têtière, en cas de choc latéral, et donc la tête et l'épaule de l'enfant transporté.

## Revendications

1. Siège auto pour enfant, comprenant un dossier (111) présentant des extensions latérales (113, 114) et/ou une têtière (115) comprenant des joues latérales (32), s'étendant vers l'avant dudit siège, depuis une portion arrière dudit dossier, **caractérisé en ce qu'**il comprend au moins un élément de protection (13) d'une desdites extensions latérales et/ou d'une desdites joues latérales, dont :
- une première extrémité est montée sur ou à proximité de ladite portion arrière du dossier ; et
- une seconde extrémité se projette vers l'avant dudit siège, sensiblement parallèlement à ladite extension latérale (113, 114) et/ou de ladite joue latérale (32),
ladite seconde extrémité présentant une surface de contact (31) destinée à prendre appui contre une portière de véhicule, en cas de choc appliqué sur celle-ci.

2. Siège auto selon la revendication 1, **caractérisé en ce qu'**un espace libre (36) est ménagé entre ladite seconde extrémité et ladite extension latérale et/ou ladite joue latérale.

3. Siège auto selon l'une quelconque des revendications 1 et 2, **caractérisé en ce que** ledit élément de protection présente une surface d'appui (341), destinée à reposer contre ladite extension latérale.

4. Siège auto selon l'une quelconque des revendications 1 à 3, **caractérisé en ce que** ledit élément de protection comprend une structure de renfort (50) et une coque extérieure (53).

5. Siège auto selon la revendication 4, **caractérisé en ce que** ladite structure de renfort (50) comprend un fil métallique rigide replié en U.

6. Siège auto selon l'une quelconque des revendications 1 à 5, **caractérisé en ce que** ledit élément de protection (13) est équipé de moyens (51, 52) de solidarisation réversibles avec ledit dossier.

7. Siège auto selon les revendications 4 et 6, **caractérisé en ce que** lesdits moyens de solidarisation sont formés par les extrémités dudit fil métallique (51, 52).

8. Siège auto selon l'une quelconque des revendications 6 à 7, **caractérisé en ce que** ledit élément de protection (13) est symétrique, de façon à pouvoir être monté sélectivement d'un côté ou de l'autre dudit siège.

9. Siège auto selon la revendication 8, **caractérisé en ce qu'**il comprend un unique élément de protection (13).

10. Elément de protection (13) d'une extension latérale et/ou d'une joue latérale d'une têtière d'un dossier de siège auto pour enfant, **caractérisé en ce qu'**il présente :
- une première extrémité montée sur ou à proximité de la portion arrière dudit dossier ; et
- une seconde extrémité se projette vers l'avant dudit siège, sensiblement parallèlement à ladite extension latérale (113, 114) et/ou de ladite joue latérale (32),
ladite seconde extrémité présentant une surface de contact (31) destinée à prendre appui contre une portière de véhicule, en cas de choc appliqué sur celle-ci.
